# EUROPEAN PATENT APPLICATION

(11) **EP 4 629 604 A1**
(43) Date of publication of application: **08.10.2025**
(21) Application number: 23912561.0
(22) Date of filing: 10.11.2023
(51) Int. Cl.: H04M 1/72415, H04M 1/72469, G16Y 40/30

(54) **ELECTRONIC DEVICE FOR CONTROLLING OUTPUT DEVICES ON BASIS OF CONTENT PLAYBACK, OPERATION METHOD THEREOF, AND STORAGE MEDIUM**

(30) Priority: 27.12.2022 KR 20220185791; 03.01.2023 KR 20230000887
(71) Applicant: Samsung Electronics Co., Ltd., Suwon-si, Gyeonggi-do 16677 (KR)
(72) Inventor: KIM, Daejin, Suwon-si, Gyeonggi-do 16677 (KR); KWON, Jeongwook, Suwon-si, Gyeonggi-do 16677 (KR); KIM, Sangheon, Suwon-si, Gyeonggi-do 16677 (KR); MOON, Taejin, Suwon-si, Gyeonggi-do 16677 (KR); PARK, Youngman, Suwon-si, Gyeonggi-do 16677 (KR); PARK, Taeuk, Suwon-si, Gyeonggi-do 16677 (KR); LIM, Yeunwook, Suwon-si, Gyeonggi-do 16677 (KR)
(74) Representative: Gulde & Partner
(86) International application number: PCT/KR2023/018076
(87) International publication number: WO 2024/143884

(57) **Abstract**

According to one embodiment, an electronic device (101) may comprise a display (160, 360), a communication module (190, 390), a processor (120, 320) operatively coupled to the display and the communication module, and a memory (130, 330) for storing instructions. According to one embodiment, the instructions may be configured so that the electronic device obtains, through the communication module (390), information about at least one output device corresponding to each of a plurality of content playback services, generates, on the basis of the obtained information, a plurality of pages for displaying lists of at least one output device for each of the plurality of content playback services, and displays at least one of the plurality of pages on the display (360) on the basis of a first user input, and, in response to at least one output device being selected from the list of at least one output device on the displayed page, the at least one output device that has been selected provides the content playback service among the plurality of content playback services.

## Description

### [Technical Field]

An embodiment of the disclosure relates to an electronic device controlling output devices based on content reproduction, an operation method thereof, and a storage medium.

### [Background Art]

More and more services and additional functions are being provided through user terminals, e.g., smartphones, or other electronic devices. To meet the needs of various users and increase utility value of electronic devices, communication service carriers or device manufacturers are jumping into competitions to develop electronic devices with various features. Accordingly, various functions that are provided through electronic devices are evolving more and more.

As wireless communication technology develops, devices using artificial intelligence (AI) have been widely introduced. For example, home appliances connected over a network through Internet of things (hereinafter, IoT) technology may utilize artificial intelligence. The IoT technology may provide intelligent Internet technology services that create new values in human life by collecting and analyzing data generated by devices. Through the convergence and combination of existing Internet technologies and various industries, IoT technology may be applied to fields, such as smart homes, smart buildings, smart cities, smart cars, and smart home appliances.

Meanwhile, the home is equipped with various home appliances for user convenience. Various services have been proposed to make manipulation or control of home appliances more convenient by way of IoT technology. The home network technology may provide various services through the home network to users in the home. For example, the user may control various IoT devices (e.g., IoT technology-applied home appliances) constituting a home network (e.g., IoT technology-applied home devices) using a personal electronic device (e.g., a smart phone).

Further, as output devices capable of outputting images and/or sounds are developed in various forms, users may desire to receive more diverse services according to user environments or contexts in the fields of output device control.

### [Detailed Description of the Invention]

### [Technical Solution]

According to an embodiment, an electronic device 101 may comprise a display 160, 360, a communication module 190, 390, a processor 120, 320 operatively connected to the display and the communication module, and memory 130, 330 storing instructions. According to an embodiment, the instructions may be configured to, when executed by the processor, cause the electronic device to obtain information about at least one output device corresponding to each of a plurality of content reproduction services through the communication module 390. According to an embodiment, the instructions may be configured to, when executed by the processor, cause the electronic device to, based on the obtained information, generate a plurality of pages for displaying a list of at least one output device for each of the plurality of content reproduction services. According to an embodiment, the instructions may be configured to, when executed by the processor, cause the electronic device to, based on a first user input, display at least one of the plurality of pages on the display 360. According to an embodiment, the instructions may be configured to, when executed by the processor, cause the electronic device to, in response to selection of at least one output device from the list of the at least one output device of the displayed page, provide a corresponding content reproduction service among the plurality of content reproduction services by the selected at least one output device.

According to an embodiment, a method for operating an electronic device 101 controlling output devices based on content reproduction may comprise obtaining information about at least one output device corresponding to each of a plurality of content reproduction services. According to an embodiment, the method may comprise, based on the obtained information, generating a plurality of pages for displaying a list of at least one output device for each of the plurality of content reproduction services. According to an embodiment, the method may comprise, based on a first user input, displaying at least one of the plurality of pages. According to an embodiment, the method may comprise, in response to selection of at least one output device from the list of the at least one output device of the displayed page, controlling to provide a corresponding content reproduction service among the plurality of content reproduction services by the selected at least one output device.

According to an embodiment, in a non-volatile storage medium storing instructions configured to, when executed by a processor 120, 320 of an electronic device 101, cause the electronic device to perform at least one operation, the at least one operation may comprise obtaining information about at least one output device corresponding to each of a plurality of content reproduction services. According to an embodiment, the storage medium may comprise, based on the obtained information, generating a plurality of pages for displaying a list of at least one output device for each of the plurality of content reproduction services. According to an embodiment, the storage medium may comprise, based on a first user input, displaying at least one of the plurality of pages. According to an embodiment, the storage medium may comprise, in response to selection of at least one output device from the list of the at least one output device of the displayed page, controlling to provide a corresponding content reproduction service among the plurality of content reproduction services by the selected at least one output device.

### [Brief Description of the Drawings]

FIG. 1 is a block diagram illustrating an electronic device in a network environment according to an embodiment;
FIG. 2 is a view illustrating a system configuration in an IoT environment for controlling output devices based on content reproduction according to an embodiment;
FIG. 3 is a block diagram illustrating an internal configuration of an electronic device according to an embodiment;
FIG. 4 is a view illustrating output devices controllable for each content reproduction service according to an embodiment;
FIG. 5 is a flowchart illustrating operations of an electronic device to control output devices based on content reproduction according to an embodiment;
FIG. 6 is a flowchart illustrating detailed operations of an electronic device according to an embodiment;
FIG. 7 is a flowchart illustrating signal transmission/reception between components when reproduction starts and an initial process according to an embodiment;
FIG. 8 is a flowchart illustrating signal transmission/reception between components after reproduction starts according to an embodiment;
FIG. 9 is a view illustrating output devices controllable for each content reproduction service using a layer structure according to an embodiment;
FIG. 10 is a view illustrating an example of a configuration of output devices controllable for each content reproduction service according to an embodiment;
FIG. 11 is a view illustrating a transmission scheme for content reproduction according to an embodiment;
FIG. 12 is a view illustrating an example of a screen representing pages in which a list of output devices controllable for each content reproduction service is displayed in a first scheme according to an embodiment;
FIG. 13 is a view illustrating an example of a screen representing pages in which a list of output devices controllable for each content reproduction service is displayed in a second scheme according to an embodiment;
FIG. 14 is a view illustrating an example of a screen representing pages in which a list of output devices controllable for each content reproduction service is displayed in a third scheme according to an embodiment;
FIG. 15 is a view illustrating an example of a screen representing pages in which a list of output devices controllable for each content reproduction service is displayed in a fourth scheme according to an embodiment; and
FIG. 16 is a view illustrating an example of a screen representing pages in which a list of output devices controllable for each content reproduction service is displayed in a fifth scheme according to an embodiment.

In connection with the description of the drawings, the same or similar reference numerals may be used to denote the same or similar elements.

### [Mode for Carrying out the Invention]

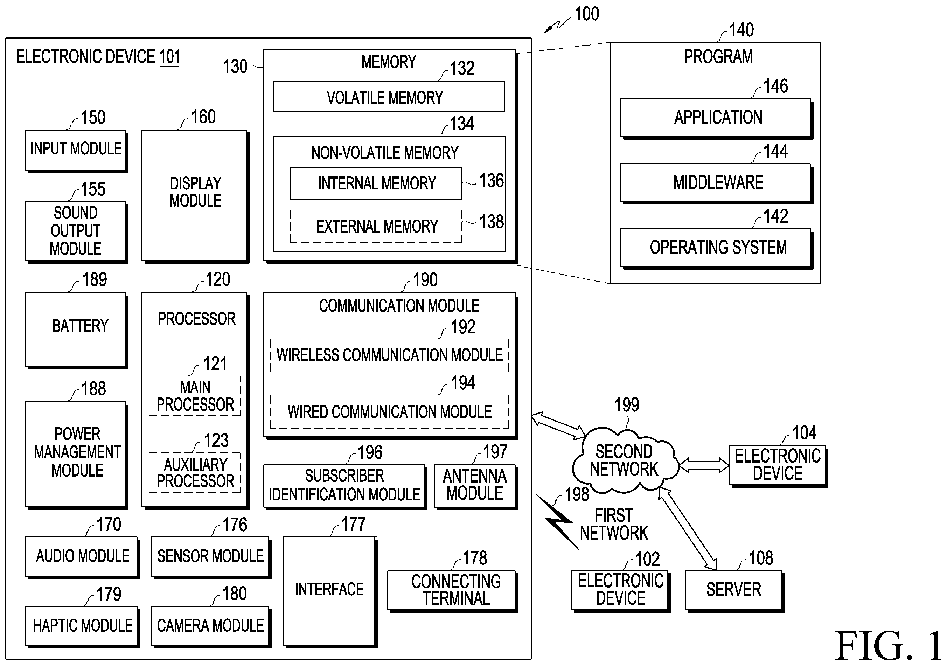

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, the components easy to understand from the description of the above embodiments are denoted with or without the same reference numerals and their detailed description may be skipped. According to an embodiment of the disclosure, an electronic device 101 may be implemented by selectively combining configurations of different embodiments, and the configuration of one embodiment may be replaced by the configuration of another embodiment. However, it is noted that the present invention is not limited to a specific drawing or embodiment.

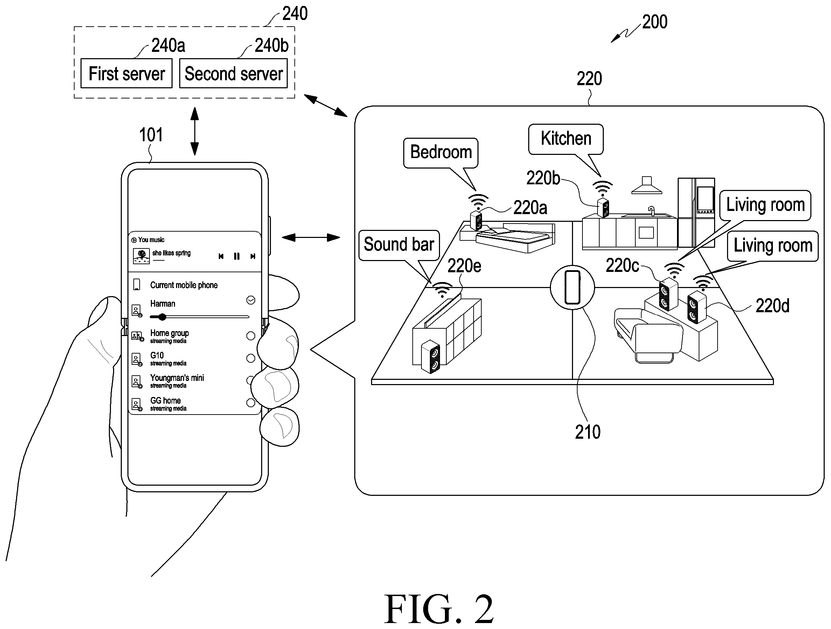

FIG. 2 is a view illustrating a system configuration in an IoT environment for controlling output devices based on content reproduction according to an embodiment.

The types of content provided by the electronic device 101 are diversifying, and the content may be, e.g., content such as music, TV shows, or movies downloaded or streamed from at least one server (e.g., a content provider), or video content captured by the user. In the following description, the content includes a visual image and/or an audible sound, and may include, e.g., an image or an audio or both audio and an image. Here, the image may refer to a video, and the audio may also be described as sound. Such content may be referred to as media.

The electronic device according to an embodiment may provide a user interface for controlling to output the audio being output according to the content reproduction through at least one external device connectable to the electronic device, more specifically for controlling at least one external device individually for each content reproduction service. The electronic device provides an integrated user interface for selecting external devices for each content reproduction service, so that the user may easily adjust to output audio through a desired external device according to the type of content reproduced by the electronic device, thereby increasing user convenience.

Referring to FIG. 2, the electronic device 101 of FIG. 2 may be the electronic device 101 of FIG. 1.

In the IoT system 200 as shown in FIG. 2, the user may use one or more electronic devices 101, and have and control at least one connectable device based on the electronic device 101. Accordingly, the electronic device 101 may control at least one external device 220 connected through a network in an IoT environment. For example, in order for the user to control peripheral devices connected to the IoT system when reproducing content such as music, it may receive and reproduce limited content using separate hardware or through separate interworking with a specific content provider. In this case, individual integration work may be required each time to enable interworking with peripheral devices connected to the IoT system. Further, due to the development of various speaker devices, it is necessary to provide an interactive service, i.e., a service that is more consistent with the user's intention in conjunction with various contents.

Therefore, it is necessary to provide an output according to content reproduction through various external devices that may interwork with the electronic device 101 without being limited to content of a specific format. Here, the output according to the content reproduction may include at least one of an image and an audio. When the external device supports a function of outputting an image, the image and the audio according to content reproduction may be simultaneously output. On the other hand, when the external device does not support a function of outputting an image, it may output audio according to content reproduction.

Accordingly, an example of outputting audio according to content reproduction is described below for convenience of description, but it should be understood that video may be output together with audio depending on the type of the external device.

Hereinafter, in an embodiment, an electronic device for controlling an external device based on content reproduction, an operation method thereof, and a storage medium are provided.

Referring to FIG. 2, a system 200 for controlling content output may include an electronic device 101, a hub 210, a plurality of external devices 220, and/or a server 240. According to an embodiment, the server 240 may include a first server 240a and a second server 240b. For example, the first server 240a may be an IoT server, and the second server 240b may be a content provider. Further, the server 240 may further include servers such as a cloud server or an application market server.

For example, when the first server 240a is an IoT server and a plurality of external devices 220 are positioned in different places (or spaces) within the IoT environment, the electronic device 101 may be communicatively connected to the plurality of external devices 220, but may also be communicatively connected through the hub 210.

According to an embodiment, the hub 210 may include a communication unit, and may receive data from the plurality of external devices 220 through the communication unit. The hub 210 may be referred to as a hub device, a control device, an access point (AP), a coordinator, a server, or a bridge. For example, the hub 210 may collect data received from the plurality of external devices 220, and the collected data may be transmitted to the electronic device 101 in the house or a server (e.g., IoT server) positioned remotely. For example, the hub 210 may be formed as a separate device or may include an electronic device such as a TV or a PC.

According to an embodiment, the plurality of external devices 220 may be positioned in various spaces, and may be communicatively connected to the electronic device 101 through the hub 210. According to an embodiment, the plurality of external devices 220 may include various types of electronic devices or digital devices that operate based on Internet of things (IoT) technology such as smart home. The plurality of external devices 220 may be referred to as Internet-of-things devices or IoT devices.

According to an embodiment, at least some 220a, 220b, 220c, 220d, and 220e of the plurality of external devices 220 may be output devices capable of outputting image and/or audio, as output destinations when content is reproduced in the electronic device 101. For example, the output devices capable of video and/or audio output may include external speakers (e.g., Bluetooth speakers or sound bars), earphones, headphones, headsets, or TVs that may be connected to electronic device 101.

The plurality of output devices 220a, 220b, 220c, 220d, and 220e according to an embodiment are not limited to the above-listed types of devices, but may include all output devices capable of outputting images and/or audio while communicating with the electronic device 101. The electronic device 101 may perform 1:N communication with the plurality of output devices 220a, 220b, 220c, 220d, and 220e.

According to an embodiment, at least some of the plurality of output devices 220a, 220b, 220c, 220d, and 220e may output audio according to music reproduction through the server 240 (e.g., a content provider) based on address information for, or capable of, receiving data from the electronic device 101 when playing music.

According to an embodiment, the electronic device 101 is a device that manages the plurality of output devices 220a, 220b, 220c, 220d, and 220e, and may search for the peripheral output devices 220a, 220b, 220c, 220d, and 220e in relation to content reproduction and establish communication with each of the output devices 220a, 220b, 220c, 220d, and 220e. Accordingly, the electronic device 101 may receive data from the plurality of output devices 220a, 220b, 220c, 220d, and 220e, and display a screen for the plurality of output devices 220a, 220b, 220c, 220d, and 220e in response to the received data. For example, the electronic device 101 may manage connection state information about the plurality of output devices 220a, 220b, 220c, 220d, and 220e based on the obtained data.

According to an embodiment, the electronic device 101 may execute an application capable of playing content such as music. For example, the electronic device 101 may output an output according to the reproduction of the content through a menu provided by the application using at least some of the external output devices 220a, 220b, 220c, 220d, and 220e. The application may be an application supporting a music linkage service capable of selectively connecting and controlling an output device according to content reproduction.

In an embodiment, the application capable of playing content may be an application program that controls the electronic device 101 to play media content such as video, music, and radio, and the electronic device 101 may reproduce the corresponding content according to the content reproduction application and provide it to the user.

The content may include, e.g., web content provided through the Internet and multimedia content provided through the broadcasting network. According to an embodiment, the electronic device 101 may download or receive a stream of the content from at least one server (e.g., a content provider) through the network. As described above, the type of content may be any media content that may be reproduced in the electronic device 101 through download or streaming. In the following description, music among media contents is described as an example.

For example, according to an embodiment, a content reproduction service refers to a content reproduction application, which may include a music streaming application (or a sound source platform), a streaming media player (or a video sharing service) (e.g., YouTube, Chromecast, over-the-top (OTT) platform), or a video reproduction application. According to an embodiment, the electronic device 101 may identify connectable output devices according to the type of sound source data reproduced or the type of application for playing the same, and list up and provide the same. In this case, even if the output device may not access a specific server (e.g., a content provider) or the electronic device 101 has a local content file, it is possible to identify and provide output devices connectable according to reproduction content so that the user may select an optimal output device for each service circumstance.

Further, when two or more applications are executed, the electronic device 101 may display an integrated user interface that may select output devices for each of the executed applications rather than each individual user interface.

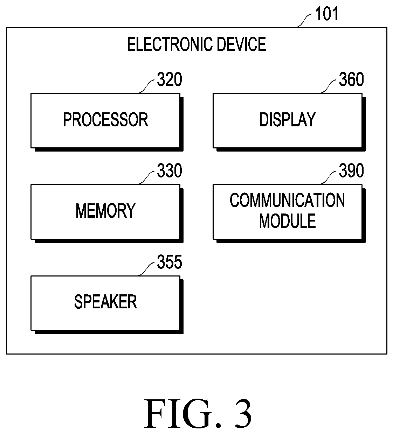

FIG. 3 is a block diagram illustrating an internal configuration of an electronic device according to an embodiment.

Referring to FIG. 3, the electronic device 101 may include at least one processor 320, memory 330, a speaker 355, a display module 360, and/or a communication module 390. Here, not all of components illustrated in FIG. 3 are essential components of the electronic device 101, and the electronic device 101 may be implemented by more or less components than those illustrated in FIG. 3. In describing the electronic device 101 of FIG. 3, a detailed description of a configuration similar to the embodiment of FIG. 1 or that may be easily understood through the embodiment of FIG. 1 may be omitted.

According to an embodiment, the memory 330 (e.g., the memory 130 of FIG. 1) may store information for communication with at least one of a plurality of output devices and transmitted/received data. According to an embodiment, the memory 330 may store a control program for controlling the electronic device 101, a UI related to an application downloaded from the outside or provided by the manufacturer and images for providing the UI, user information, documents, databases, or related data. For example, the memory 330 may store a content reproduction application (hereinafter referred to as a content reproduction app), and the content reproduction app may support a function for providing a list of connectable output devices (e.g., at least one of the plurality of output devices 220a, 220b, 220c, 220d, and 220e of FIG. 2) when playing content.

According to an embodiment, the memory 330 may store instructions that, when executed, control the processor 320 to perform various operations. According to an embodiment, the memory 330 may be operatively connected to the speaker 355, the communication module 390, the display module 360, and the processor 320 and may store instructions for identifying at least one output device (e.g., an external speaker (e.g., a Bluetooth speaker or a sound bar), an earphone, a headphone, a headset, or a TV) interworkable in relation to content reproduction, displaying a settings screen including a list of the identified output devices and, based on selection of at least one output device from the list of the identified output devices, controlling the selected at least one output device to provide an output according to the content reproduction.

According to an embodiment, the speaker 355 may receive an electrical signal from the processor 320 to generate a sound and output the sound to the outside of the electronic device 101. The speaker 355 may output a sound signal according to content reproduction to the outside of the electronic device 101.

According to an embodiment, the communication module 390 may perform communication with output devices under the control of the processor 320. According to an embodiment, the communication module 390 may perform communication using at least one of communication schemes including Zigbee, Z-wave, Wi-Fi, Bluetooth, ultra-wide band (UWB), wireless USB, and near-field communication (NFC). For example, the communication module 390 may perform low-power wireless communication using Zigbee or Z-wave communication for communication with the output devices. According to an embodiment, the communication module 390 may support short-range communication such as Bluetooth or near-field communication (NFC) in addition to Zigbee or Z-wave communication.

According to an embodiment, the communication module 390 may be communicatively connected to at least one output device. According to an embodiment, the communication module 390 may be connected to one or more output devices (e.g., at least one of the plurality of output devices 220a, 220b, 220c, 220d, and 220e of FIG. 2) through a 1:1 connection method or a 1:n connection method. Further, the communication module 390 may be wirelessly connected to the output device through various communication schemes. For example, the communication module 390 may be configured to be connected to the output device using at least one of LTE communication, Wi-Fi direct communication, or bidirectional Bluetooth communication schemes. Further, the communication module 390 may be configured to be connected to the output device using a cloud-based ID. As such, the processor 320 may be connected to n output devices through a 1:n connection method supported by the communication module 390, and supportable communication schemes may not be limited thereto.

According to an embodiment, the communication module 390 may operate based on at least one of ultra-wide band (UWB) communication schemes or Bluetooth low energy (BLE) communication schemes.

For example, the communication module 390 may include a UWB communication module. The UWB communication module may support the electronic device 101 to perform UWB communication with the output device. The UWB communication module may measure the distance between the electronic device 101 and the output device through UWB communication. The UWB communication module may measure the direction (e.g., angle of arrival (AOA)) of the output device using a plurality of antennas.

For example, the electronic device 101 may obtain the final azimuth using UWB using the relative azimuth with respect to a reference azimuth and the UWB angle of arrival (AOA) using a geomagnetic sensor, thereby obtaining location-related information for n output devices. The location-related information may be used to identify the location or direction of the external device within a predetermined radius or place with respect to the electronic device 101.

According to an embodiment, the processor 320 may perform an operation based on at least one communication scheme supported by the electronic device 101. According to an embodiment, the processor 320 may be connected to peripheral output devices through a designated communication scheme. For example, the processor 320 may communicate with at least some of the output devices using a first communication scheme, and communicate with at least some of the output devices using a second communication scheme. For example, the processor 320 may communicate indirectly with the output devices through the hub 210, and the output devices may communicate with each other or with the electronic device 101 through an adjacent external device or the hub 210 corresponding to an intermediate medium.

According to an embodiment, the processor 320 may obtain information about at least one output device for each of a plurality of content reproduction apps (or a plurality of content reproduction services). To that end, the processor 320 may pre-register information about the output devices in at least one server (e.g., a content provider or an IoT server). For example, the processor 320 may monitor, set, and control registered output devices so that the output when playing content in the electronic device 101 may be output through another output device using the user account. For example, in the content reproduction app, the processor 320 may provide a menu for connection between the electronic device 101 and at least one output device when playing content. At the start of the content reproduction or during the content reproduction, in response to a user request, the processor 320 may identify at least one target capable of outputting according to the content reproduction.

For example, a framework may provide information related to the type of application capable of content reproduction, application ID, or reproduction status. Further, the media controller may obtain the name of the application (e.g., the name of the content provider) that currently reproduces the content. Accordingly, the processor 320 may obtain attribute information about the application that performs content reproduction to identify the application that is to actually reproduce content based on the information provided by the framework. For example, when the application type is a media type and reproduction is in progress, the processor 320 may identify an application ID that matches the name of the application obtained from the media controller. Accordingly, the framework may request and fetch the sound source corresponding to the application ID according to content reproduction-related information, e.g., audio information (e.g., sample rate, bit, or channel). The content reproduction-related information may be referred to as media session information.

The processor 320 may identify at least one output device corresponding to the content reproduction app at the start of content reproduction or during content reproduction. The processor 320 may identify at least one output device based on information related to content reproduction and/or information about registered output devices, and may provide a list of connectable output devices.

According to an embodiment, the processor 320 may generate a plurality of pages for displaying a list of at least one output device for each of the plurality of content reproduction apps. The processor 320 may display at least one of the plurality of pages on the display 360 based on a user input.

According to an embodiment, when the user selects one output device from the list of output devices of the displayed page, the processor 320 may control to output an output (e.g., image and/or audio) according to content reproduction through the selected output device during content reproduction.

Further, according to an embodiment, when the user selects two or more output devices from the list of output devices of the displayed page, the processor 320 may control to output the same operation as the output (e.g., image and/or audio) according to content reproduction in the electronic device 101 simultaneously through the selected output devices. Accordingly, when the audio according to the content reproduction is output from the electronic device 101, the same audio may be controlled to be output through each of the selected output devices.

Further, according to an embodiment, the processor 320 may change the currently displayed page to another page and display it on the display 360 according to a designated user input, such as a swipe gesture, in a state in which the plurality of pages are arranged sequentially in order of execution. The designated user input may include at least one of a designated type of touch input, a designated key input, a designated motion gesture, a designated type of interaction input, or a user voice input through the microphone of the electronic device 101. The designated type of interaction input may be detected using a sensor module (e.g., the sensor module 176 of FIG. 1) including a 6-axis sensor, and the page may be changed in response to the user tilting the electronic device 101 in a desired direction.

Further, the method for changing the page is not limited to the designated user input, and for example, the change may be changed into another page as an object (e.g., an arrow icon) for page shift is provided on the currently displayed page and the user selects the object. As described above, the method for changing the page may not be limited to what has been described above.

When the user selects at least one output device from the list of output devices of the changed page, the processor 320 may control to output an output (e.g., image and/or audio) according to content reproduction through the selected at least one output device during content reproduction.

Further, the user may designate desired output devices in the list of output devices, as one group. Therefore, when the content reproduction app is executed thereafter, a list of output devices including the output devices designated as the group may be displayed on the corresponding page. Further, during the initial registration process, the user may designate a group for the desired output devices and store it in the server in advance.

Meanwhile, since each of the plurality of pages corresponds to the plurality of content reproduction apps, respectively, at least one output device selected from the displayed page and at least one output device selected from the page changed according to the swipe gesture may be different from each other. Accordingly, even when the first content of the first content reproduction app and the second content of the second content reproduction app are simultaneously reproduced in the electronic device 101, the audio according to the reproduction of the first content and the audio according to the reproduction of the second content may be simultaneously output through different output devices.

According to an embodiment, the processor 320 may download or receive a stream of content from at least one server (e.g., a content provider) through the network based on a designated transmission service protocol. Therefore, if the content reproduction app supports a transmission service protocol that may provide an output according to content reproduction to an output device, the electronic device 101 may reproduce different contents through different content reproduction apps while simultaneously controlling to output outputs of different contents through different output devices. As such, when the transmission service protocol supported for each content reproduction app is different, outputs according to content reproduction may be output through different output devices without collision during data transmission.

To that end, the processor 320 may identify the transmission service protocol for each of the plurality of content reproduction apps. The processor 320 may identify at least one output device connectable to the electronic device 101 based on the identified transmission service protocol. Accordingly, the processor 320 may generate a list of at least one output device connectable to the electronic device 101 in response to each of the identified transmission service protocols.

When the content is streamed in real-time based on a designated transmission service protocol, the processor 320 may transmit address information (e.g., URL information) capable of receiving an output according to content reproduction to at least one output device. Here, the at least one output device may be an output device selected by the user from the list of output devices. Accordingly, the at least one output device may provide an output according to content reproduction received from a corresponding server (e.g., a content provider) based on the address information. For example, the processor 320 may output the audio for the content being reproduced through the at least one output device.

Further, the processor 320 may provide audio for the content being reproduced to the at least one output device through audio mirroring based on the transmission service protocol, and output the audio through the at least one output device.

Further, when reproducing downloaded or stored content in the electronic device 101, the processor 320 may provide audio for the content being reproduced to at least one output device through a Bluetooth scheme based on the transmission service protocol.

According to an embodiment, when the content reproduction app is installed in the electronic device 101, the processor 320 may register information about the output device corresponding to the content reproduction app together with attribute information about the content reproduction app in the corresponding server in advance. According to an embodiment, when the content reproduction app is executed, the processor 320 may obtain the pre-registered information. For example, if the content reproduction app is related to streaming music, the processor 320 may identify at least one output device capable of outputting audio in a streaming manner when reproducing the music, based on the obtained information.

For example, audio according to reproduction of different contents may be output through an output device selected from the first page associated with the first content reproduction app and an output device selected from the second page associated with the second content reproduction app. The processor 320 may be configured to be connected to at least one output device selected in the first page based on the first transmission service protocol, and may be configured to be connected to at least one output device selected in the second page based on the second transmission service protocol. Further, if the first content reproduction app associated with the first page supports the first and second transmission service protocols, it may be configured to be connected to at least one output device selected from the list of output devices of the first page based on the first transmission service protocol, and may be configured to be connected to the remaining output devices from the list of output devices of the first page based on the second transmission service protocol. For example, if the first content reproduction app is an app for a video sharing service (e.g., YouTube Music app), a list of output devices that support a streaming media scheme (e.g., Chromecast) and a list of output devices that support audio output may be displayed on the first page. Further, when the second content reproduction app is an S music app, a list of output devices supporting the sound source streaming service scheme may be displayed on the second page. Further, when the third content reproduction app is an M music app, and the M music app does not support the transmission service protocol, a list of output devices that support a Bluetooth scheme may be displayed on the third page.

The transmission service protocol may include at least one of a streaming media player scheme, a sound source streaming service scheme, an audio mirroring scheme, a digital living network alliance (DLNA) scheme, or a Bluetooth scheme.

According to an embodiment, when the content reproduction app is executed under the control of the processor 320, the display (or the display module) 360 (e.g., the display module 160 of FIG. 1) may display a user interface related to the executed content reproduction app. The processor 320 may display a page including a list of output devices generated based on the transmission service protocol for the executed content reproduction app.

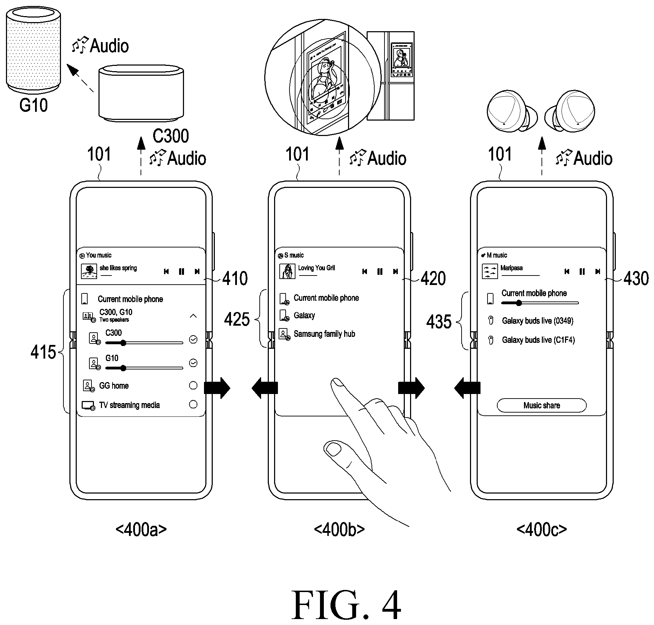

This is described in detail with reference to FIG. 4. FIG. 4 is a view illustrating output devices controllable for each content reproduction service according to an embodiment.

Referring to FIG. 4, the processor 320 may display each of output devices connectable when reproducing content on the display 360 in the form of a page using objects. The object is a graphic element related to the output device, and may include, e.g., an image representing the output device, such as an icon. Here, the page corresponds to the execution screen of the content reproduction application, and may be displayed on at least a portion of the display 360, or may be displayed to occupy the entire display 360. The page may also be referred to as, e.g., a window, a card, a widget, or a display area.

For example, a list 415 of at least one output device capable of outputting audio according to the content reproduction of the first content reproduction app may be displayed on the first page 410 associated with the first content reproduction app, as illustrated in 400a of FIG. 4. A list 425 of at least one output device capable of outputting audio according to content reproduction of the second content reproduction app may be displayed on the second page 420 associated with the second content reproduction app as shown in 400b of FIG. 4. A list 435 of at least one output device capable of outputting audio according to content reproduction of the third content reproduction app may be displayed on the third page 430 associated with the third content reproduction app as shown in 400c of FIG. 4.

FIG. 4 illustrates a case in which a plurality of pages corresponding to each content reproduction app are arranged in order of execution of the first page 410, the second page 420, and the third page 430. While the first page 410 is displayed, a page 420 or 430 different from the first page 410 may be displayed in response to a swipe gesture on the first page 410. For example, if a request for outputting audio according to content reproduction is received while the content of the first content reproduction app is being reproduced, the processor 320 may display a first page for displaying a list of at least one connectable output device for the first content reproduction app in response to the request. If there is the user selection on a menu for outputting audio according to the content reproduction of the fourth content reproduction app while the content of the fourth content reproduction app is being reproduced, the processor 320 may add and display a fourth page for displaying a list of at least one output device connectable for the fourth content reproduction app to the first to third pages in response to the user selection.

According to an embodiment, the electronic device 101 may identify a list of connectable output devices for each content reproduction app, so that even a content reproduction app (or a content reproduction service) that does not provide content reproduction to an external output device may provide a content reproduction function to an external output device through the electronic device 101. Further, the electronic device 101 may control the connected output device to provide an output according to content reproduction through connection with a server (e.g., a content provider), thereby minimizing data loss due to content reproduction and providing high-quality output to the user. This may enhance the quality of services in that it is able to simultaneously reproduce ones' own playlists, as well as of users and businesses owning high-quality content, simultaneously to a plurality of output devices.

According to an embodiment, an electronic device 101 may comprise a display 160, 360, a communication module 190, 390, a processor 120, 320 operatively connected to the display and the communication module, and memory 130, 330 storing instructions. According to an embodiment, the instructions may be configured to, when executed by the processor, cause the electronic device to obtain information about at least one output device respectively corresponding to a plurality of content reproduction services through the communication module 390. According to an embodiment, the instructions may be configured to, when executed by the processor, cause the electronic device to, based on the obtained information, generate a plurality of pages for displaying a list of at least one output device for each of the plurality of content reproduction services. According to an embodiment, the instructions may be configured to, when executed by the processor, cause the electronic device to, based on a first user input, display at least one of the plurality of pages on the display 360. According to an embodiment, the instructions may be configured to, when executed by the processor, cause the electronic device to, in response to selection of at least one output device from the list of the at least one output device of the displayed page, provide a corresponding content reproduction service among the plurality of content reproduction services by the selected at least one output device.

According to an embodiment, the instructions may be configured to, when executed by the processor, cause the electronic device to output an audio according to the content reproduction by the selected at least one output device during content reproduction of the corresponding content reproduction service.

According to an embodiment, the instructions may be configured to, when executed by the processor, cause the electronic device to, in response to selection of two or more output devices from the list of the at least one output device of the displayed page, output an audio according to the content reproduction during the content reproduction of the corresponding content reproduction service by each of the selected two or more output devices.

According to an embodiment, the instructions may be configured to, when executed by the processor, cause the electronic device to identify a transmission service protocol for each of the plurality of content reproduction services, and identify at least one output device connectable to the electronic device based on the identified transmission service protocol.

According to an embodiment, the instructions may be configured to, when executed by the processor, cause the electronic device to generate a list of the at least one output device connectable to the electronic device, corresponding to each identified transmission service protocol.

According to an embodiment, the instructions may be configured to, when executed by the processor, cause the electronic device to, in response to the selection of the at least one output device from the list of the at least one output device of the displayed page, connect to the selected at least one output device based on a transmission service protocol for the corresponding content reproduction service.

According to an embodiment, the instructions may be configured to, when executed by the processor, cause the electronic device to connect to at least one output device form the list of the at least one output device of the displayed page based on a first transmission service protocol, and connect to a remaining output device from the list of the at least one output device of the displayed page based on a second transmission service protocol.

According to an embodiment, the transmission service protocol may include at least one transmission scheme among a streaming media player scheme, a sound source streaming service scheme, an audio mirroring scheme, a digital living network alliance DLNA scheme, or a Bluetooth scheme.

According to an embodiment, the instructions may be configured to, when executed by the processor, cause the electronic device to, while the plurality of pages are arranged in an order of executing a first page, a second page, and a third page, and the first page is displayed, display a page different from the first page in response to a swipe gesture to the first page.

According to an embodiment, the instructions may be configured to, when executed by the processor, cause the electronic device to receive a request for outputting the audio according to the content reproduction during the content reproduction of the corresponding content reproduction service among the plurality of content reproduction services on the electronic device, and display, on the display 360, a page for displaying the list of the at least one output device for the corresponding content reproduction service in response to the request.

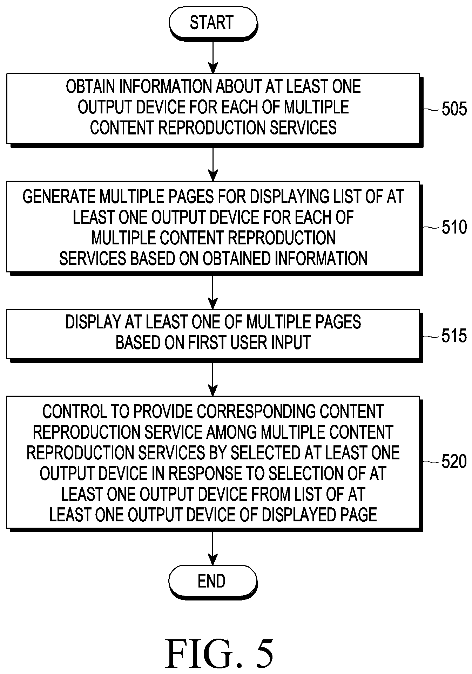

FIG. 5 is a flowchart illustrating operations of an electronic device to control output devices based on content reproduction according to an embodiment. Referring to FIG. 5, the operation method may include operations 505 to 520. Each operation of the operation method of FIG. 5 may be performed by at least one processor (e.g., the processor 120 of FIG. 1 and the processor 320 of FIG. 3) of an electronic device (e.g., the electronic device 101 of FIGS. 1 to 3). In an embodiment, at least one of operations 505 to 520 may be omitted or changed in order or may add other operations.

Referring to FIG. 5, in operation 505, the electronic device 101 may obtain information about at least one output device for each of a plurality of content reproduction services.

In operation 510, the electronic device 101 may generate a plurality of pages for displaying a list of at least one output device for each of the plurality of content reproduction services, based on the obtained information.

According to an embodiment, the electronic device 101 may identify a transmission service protocol for each of the plurality of content reproduction services. The electronic device 101 may identify at least one output device connectable to the electronic device based on the identified transmission service protocol. The electronic device 101 may generate a list of at least one output device connectable to the electronic device, in response to each of the identified transmission service protocols.

In operation 515, the electronic device 101 may display at least one of the plurality of pages based on the first user input. For example, while the first page is displayed, the electronic device 101 may display a different page from the first page in response to a swipe gesture on the first page.

In operation 520, the electronic device 101 may, in response to selection of at least one output device from the list of the at least one output device of the displayed page, control to provide a corresponding content reproduction service among the plurality of content reproduction services by the selected at least one output device.

According to an embodiment, the electronic device 101 may control to output an audio according to the content reproduction by the selected at least one output device during content reproduction of the corresponding content reproduction service.

According to an embodiment, the electronic device 101 may, in response to selection of two or more output devices from the list of the at least one output device of the displayed page, control to output an audio according to the content reproduction during the content reproduction of the corresponding content reproduction service by each of the selected two or more output devices.

According to an embodiment, the electronic device 101 may, in response to the selection of the at least one output device from the list of the at least one output device of the displayed page, perform connection to the selected at least one output device based on a transmission service protocol for the corresponding content reproduction service.

According to an embodiment, the electronic device 101 may connect to at least one output device from the list of at least one output device of the displayed page based on a first transmission service protocol. Further, the electronic device 101 may connect to the remaining other output devices from the list of at least one output device of the displayed page based on a second transmission service protocol.

According to an embodiment, the transmission service protocol may include at least one transmission scheme among a streaming media player scheme, a sound source streaming service scheme, an audio mirroring scheme, a digital living network alliance DLNA scheme, or a Bluetooth scheme.

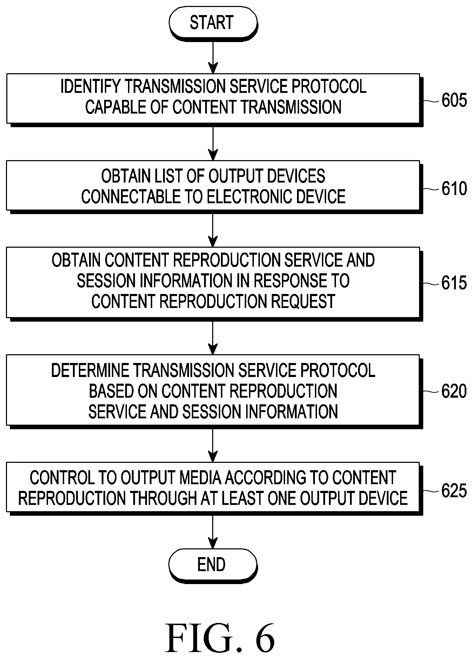

FIG. 6 is a flowchart illustrating detailed operations of an electronic device according to an embodiment. Referring to FIG. 6, the operation method may include operations 605 to 625. In an embodiment, at least one of operations 605 to 625 may be omitted or changed in order or may add other operations.

In operation 605, the electronic device 101 may identify a transmission service protocol capable of transmitting content. For example, the electronic device 101 may obtain the attribute information about the app to identify which app is the content reproduction app (or content reproduction service) to reproduce the content. Accordingly, the electronic device 101 may identify the transmission service protocol related to the content reproduction app.

In operation 610, the electronic device 101 may obtain a list of output devices connectable to the electronic device 101. According to an embodiment, the electronic device 101 may obtain information about the output device as to which output device is searched and connectable around the electronic device 101, and may generate a list of output devices based thereon. Accordingly, the electronic device 101 may obtain information about at least one output device corresponding to each content reproduction app.

According to an embodiment, the order in the list of the output devices may be determined in the order of proximity distance from the electronic device 101 based on at least one of an ultra-wide band (UWB) communication scheme or a Bluetooth low energy (BLE) communication scheme of the communication module 390. For example, when n connectable output devices are searched, the order in the list may be determined as the order of external devices closer to the electronic device 101 with respect to the electronic device 101.

According to an embodiment, the order in the list of the output devices may be determined according to the history of connection with the electronic device 101. For example, the list of output devices may be sorted in the order of more recent connections. Further, the order in the list of output devices may be determined based on at least one of the proximity distance to the electronic device 101 and the connection history.

In addition to the foregoing, the order in the list of output devices may be arranged according to the state of connection with the electronic device, the characteristics (e.g., group, single, or type) of the output devices, or in order of name. Further, the user may predetermine priorities for devices desired to be output to for each service, or the order in the list of output devices may be determined according to the priorities designated by the user, and the order of arrangement of the output devices in the list may not be limited thereto.

In operation 615, the electronic device 101 may obtain a content reproduction service and session information in response to a content reproduction request. According to an embodiment, the electronic device 101 may reproduce content streamed in real-time from a content reproduction service (or a content reproduction app) or download (or stored) content. According to an embodiment, the electronic device 101 may obtain which app is the content reproduction app that is executing reproduction, and information related to content reproduction, e.g., session information (e.g., sample rate, bit, or channel).

In operation 620, the electronic device 101 may determine a transmission service protocol based on the session information and the content reproduction service. For example, the electronic device 101 may identify which one of a streaming media player scheme, a sound source streaming service scheme, an audio mirroring scheme, a DLNA scheme, or a Bluetooth scheme the transmission service protocol is based on the content reproduction app and the session information.

In operation 625, the electronic device 101 may control to output media according to the content reproduction through at least one output device. For example, when the transmission service protocol is a streaming media player scheme, the electronic device 101 may control to output an image and/or audio according to content reproduction through at least one output device based on the streaming media player scheme. Further, if the transmission service protocol is a sound source streaming service scheme, the electronic device 101 may control to output the audio according to content reproduction through at least one output device based on the sound source streaming service scheme. Further, when the transmission service protocol is an audio mirroring scheme, the electronic device 101 may control to output the audio according to content reproduction through at least one output device based on the audio mirroring scheme. Further, when the transmission service protocol is a DLNA scheme, the electronic device 101 may control to output the audio according to content reproduction through at least one output device based on the DLNA scheme. Further, when the transmission service protocol is a Bluetooth scheme, since the electronic device 101 is in a state of being communicatively connected to at least one output device based on the Bluetooth scheme, the electronic device 101 may control to output the audio according to content reproduction through the communicatively connected output device.

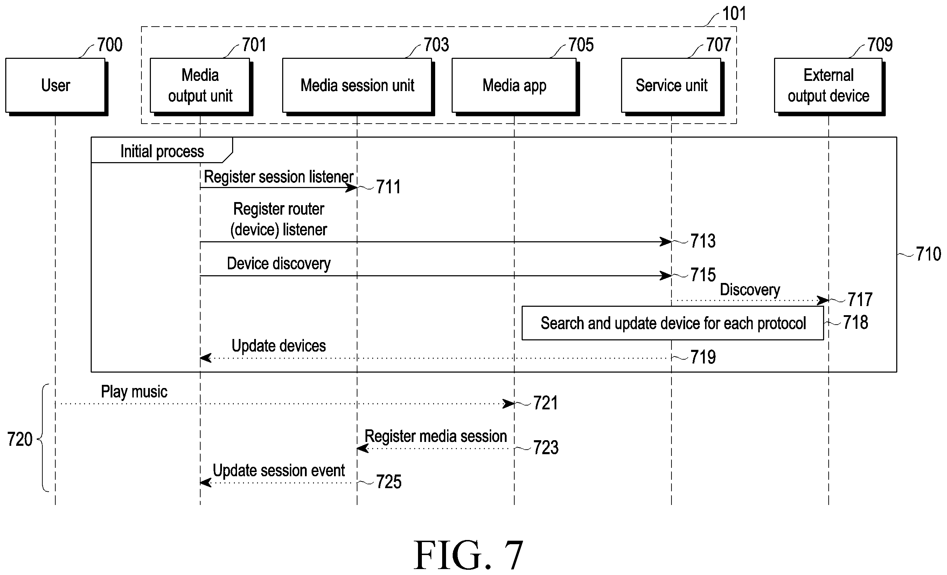

FIG. 7 is a flowchart illustrating signal transmission/reception between components when reproduction starts and an initial process according to an embodiment. The operation method of FIG. 7 may include operations 711 to 725. In the following embodiments, each operation may be performed sequentially, but is not necessarily performed sequentially. For example, at least one of operations 711 to 725 may be omitted, or the order of the operations may be changed, and at least two operations may be performed in parallel or other operations may be added.

Referring to FIG. 7, an electronic device 101 (e.g., the electronic device 101 of FIGS. 1 to 3) may include a media output unit (or media output module) 701, a media session unit (or media session module) 703, a media application unit (or media application module) 705, and a connection service unit (or connection service module) 707.

The media output unit 701 may change the audio path of the electronic device 101 and may perform a function of providing media information. For example, the media output unit 701 may identify what content is being reproduced.

The media session unit 703 may perform a function of a framework for managing session information (playback state and/or metadata) of media (image and/or audio) registered in a media application and providing media information. For example, information about content being reproduced, such as song information, may be obtained from the media session unit 703 within the framework.

The media application unit 705 may represent an application capable of providing (or reproducing) audio and/or image in real-time through a server (e.g., a content provider).

The connection service unit 707 may manage an output device (e.g., an external speaker (e.g., a Bluetooth speaker or a sound bar), an earphone, a headphone, a headset, or a TV) capable of outputting an output (image and/or audio) according to content reproduction in the electronic device 101. The connection service unit 707 is a component that provides information about each output device, and there may be a plurality of connection service units 707 according to the transmission service protocol. For example, there may be a plurality of connection service units 707 that manage information about the output device for each transmission service protocol, such as a streaming media player scheme, a sound source streaming service scheme, an audio mirroring scheme, a DLNA scheme, or a Bluetooth scheme. Therefore, the type of the external output device 709 such as an external speaker (e.g., a Bluetooth speaker or a sound bar), an earphone, a headphone, a headset, or a TV may be determined according to the service in connection service unit 707.

If a plurality of output devices connectable based on the sound source streaming service scheme are identified, information about the actually connected output device among the identified plurality of output devices may be updated and the electronic device 101 may receive it from the connection service unit 707. The information about the connectable output devices may be searched by the corresponding service unit of the connection service unit 707 based on the transmission service protocol and the content reproduction app. Here, the corresponding service unit of the connection service unit 707 may be, e.g., a service unit corresponding to any one of a streaming media player scheme, a sound source streaming service scheme, an audio mirroring scheme, a DLNA scheme, or a Bluetooth scheme. Accordingly, the list of output devices searched thereby may be provided to the user through the media output unit 701.

For example, if the content reproduction app is an app that provides music services such as the "S music app," and the S music app supports a streaming media player scheme, the electronic device 101 may request a list of output devices from the service unit corresponding to the streaming media player scheme of the connection service unit 707. Further, when the S music app supports the sound source streaming service scheme, the electronic device 101 may request a list of output devices from the service unit corresponding to the sound source streaming service scheme of the connection service unit 707. Further, in the case of audio mirroring, the electronic device 101 may request a list of output devices from the service unit corresponding to the audio mirroring scheme of the connection service unit 707. Further, in the case of the DLNA scheme or the Bluetooth scheme, the electronic device 101 may request a list of output devices through each framework.

According to an embodiment, the media output unit 701, the media session unit 703, the media application unit 705, and the connection service unit 707 other than the external output device 709 may be components in the electronic device 101. For example, the media output unit 701, the media session unit 703, the media application unit 705, and the connection service unit 707 may be included in the processor (e.g., the processor 120 of FIG. 1 and/or the processor 320 of FIG. 3) of the electronic device 101 or may be configured separately. The functions and/or operations of each of the media output unit 701, the media session unit 703, the media application unit 705, or the connection service unit 707 in FIG. 7 may be performed in the same manner by the processor (e.g., the processor 120 of FIG. 1 and/or the processor 320 of FIG. 3) of the electronic device 101.

Referring to FIG. 7, the initial process 710 is a process of registering information about the content reproduction app and the output device before performing content reproduction, and may include operations 711 to 719.

In operation 711, the electronic device 101 may register a 'session listener' (or framework) to the media session unit 703 (or framework) to obtain session information about each content reproduction app through the media output unit 701. Such session information is, e.g., information related to content reproduction, such as the playback state and/or metadata, and may include information indicating which content is being reproduced.

In operation 713, the electronic device 101 may register a 'router listener' for obtaining information about the output device connectable through the media output unit 701, i.e., capable of outputting the audio according to content reproduction, to the connection service unit 707 (or framework). Alternatively, the electronic device 101 may register the router listener to a server (e.g., a content provider) that provides the content reproduction app.

In operation 715, the electronic device 101 may request to identify a connectable output device by transmitting a 'discovery device' to the connection service unit 707 (or framework). In this case, the output device based on the Bluetooth scheme may be in a state of having already been connected to the electronic device 101. Therefore, the connection service unit 707 may discover the output device based on the Bluetooth scheme in operation 717.

In operation 718, the connection service unit 707 may search and update devices for each transmission service protocol, and may provide the same to the media output unit 701 in operation 719. For example, it is possible to obtain information about which output devices are being searched in relation to the content reproduction apps, and to identify the transmission service protocol supported by each content reproduction app. Therefore, a list of output devices respectively corresponding to the transmission service protocols may be generated. The electronic device 101 may obtain information about the output device corresponding to each content reproduction app from each service unit of the connection service unit 707, i.e., information about the output device corresponding to each transmission service protocol.

Meanwhile, the operation 720 according to content reproduction is described. In operation 721, the media application unit 705 may receive an event according to a content reproduction request from the user 700. For example, the user 700 may request content reproduction by selecting the reproduction button, 'play music' button, displayed on the content reproduction app screen.

In operation 723, the media application unit 705 may request the media session unit 703 to register media session information (playback state and/or metadata) in response to the content reproduction request. The session information may correspond to content requested to be reproduced.

In operation 725, the media session unit 703 may register the session information (playback state and/or metadata) and transmit and update a session event indicating new registration information to the media output unit 701. The media output unit 701 may detect and store an application name and session information related to reproduced content from the media session unit 703 based on the session event. For example, the electronic device 101 may identify what content is currently being reproduced by obtaining information registered in the initial process.

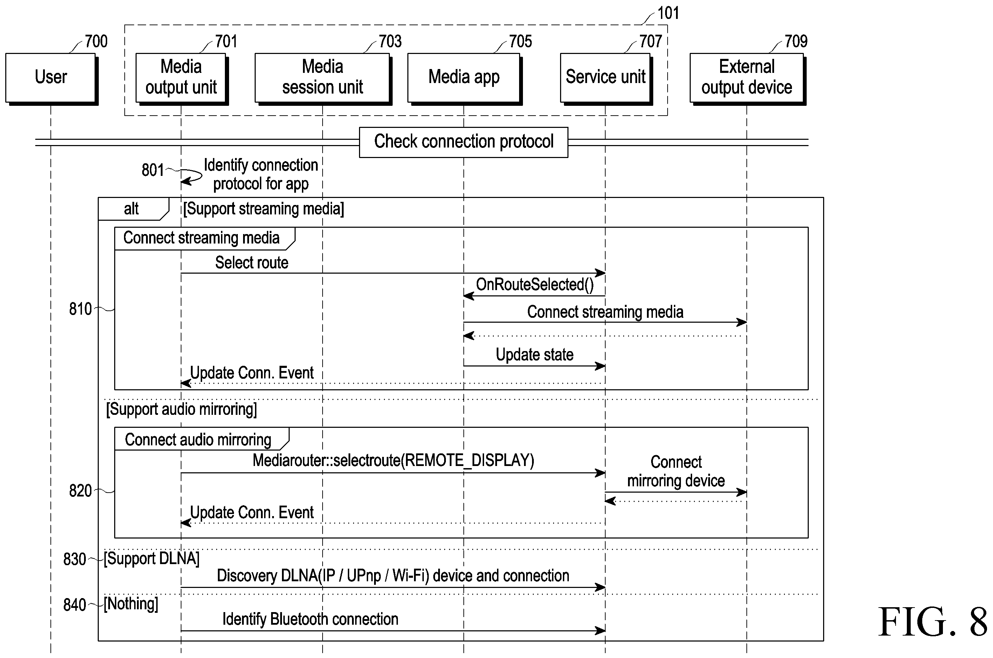

FIG. 8 is a flowchart illustrating signal transmission/reception between components after reproduction starts according to an embodiment. In the following embodiments, each operation may be performed sequentially, but is not necessarily performed sequentially. For example, the order of the operations may be changed, and at least two operations may be performed in parallel or other operations may be added. FIG. 8 illustrates a process of connecting to output devices respectively corresponding to the transmission service protocols after a reproduction request from the user, as operations subsequent to FIG. 7.

In operation 801, the electronic device 101 may identify the connection protocol for the content reproduction app through the media output unit 701. For example, the electronic device 101 may identify the transmission service protocol corresponding to the content reproduction app that executes content requested to be reproduced.

When the streaming media scheme is supported, the electronic device 101 may perform an operation 810 of connecting to the output device based on the streaming media scheme. For example, in the case of a streaming media method such as Chromecast, the electronic device 101 may determine whether an external output device may be supported through session information about a content reproduction app with a stream transfer function activated and whether a transfer receiver is registered. Further, the electronic device 101 may identify whether the content reproduction app also supports a streaming media scheme, and obtain information about at least one output device connectable based on the streaming media scheme. Further, for example, the electronic device 101 may obtain session information about the music reproduced through the music app executed by a service subscriber (or user) to a music app service and obtain information about the connectable output device from the service unit corresponding to the music app of the connection service unit 707.

When the audio mirroring scheme is supported, the electronic device 101 may perform an operation 820 of connecting to the output device based on the audio mirroring scheme. For example, in the case of the audio mirroring scheme, the electronic device 101 may identify whether to reproduce content through the media session unit 703 and, when intending to output audio according to content reproduction, obtain information about the connectable output device (e.g., a Wi-Fi speaker) from the corresponding service unit of the connection service unit 707.

When the DLNA scheme is supported, the electronic device 101 may perform an operation 830 of connecting to the output device based on the DLNA scheme. For example, in the case of the DLNA scheme, the electronic device 101 may obtain information about the connectable output device supporting the DLNA scheme through a scheme such as IP/UPnp/Wi-Fi of the network service unit of the connection service unit 707.

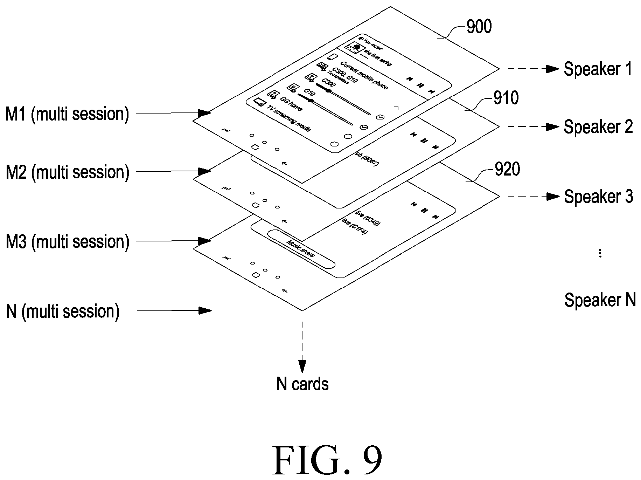

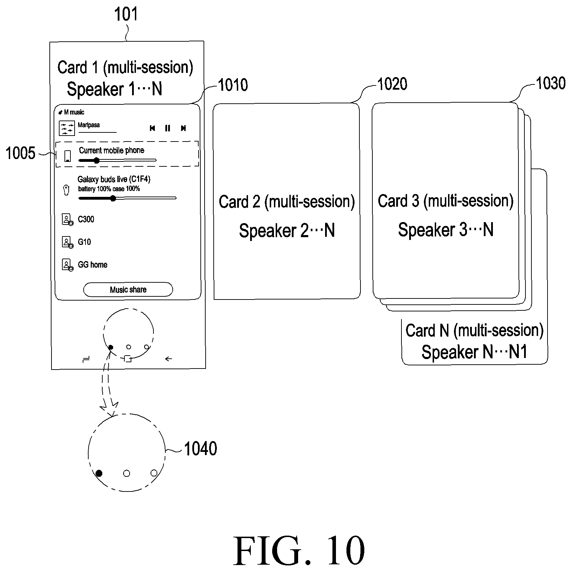

On the other hand, when the transmission service protocol as described above is not supported, the electronic device 101 may perform an operation 840 of connecting to the output device based on the Bluetooth scheme. For example, in the case of the Bluetooth scheme, when the electronic device 101 may not connect to the external output device 709 searched based on session information, the electronic device 101 may identify the Bluetooth connection history from the Bluetooth framework of the connection service unit 707 to obtain information about the connectable output device supporting the Bluetooth scheme. Accordingly, the electronic device 101 may generate a list of output devices connectable for each session, i.e., for each content reproduction app, through the media output unit 701 based on the obtained information about the output device. An example of displaying a list of output devices for each session is described with reference to FIGS. 9 and 10.

FIG. 9 is a view illustrating controllable output devices for each content reproduction service using a layer structure according to an embodiment, and FIG. 10 is a view illustrating an example of a configuration of controllable output devices for each content reproduction service, according to an embodiment.

Referring to FIG. 9, the electronic device 101 may display a list of output devices (e.g., speaker1, speaker2, speaker3, ..., speaker N) for each session (e.g., M1, M2, M3, ..., N) through the media output unit 701. The electronic device 101 may be connected to at least one output device based on the transmission service protocol selected by the user. For example, a plurality of pages (or cards) 900, 910, and 920 that display a list of at least one output device for each content reproduction app that reproduces content may be displayed as an integrated user interface. Accordingly, when two or more content reproduction apps are executed, the electronic device 101 may display an integrated user interface capable of selecting output devices for each of the executed apps.

As shown in FIG. 9, in the electronic device 101, when a plurality of content reproduction apps are executed, there may be a plurality of pages for each content reproduction app. Here, the electronic device 101 may reproduce content of one content reproduction app among the plurality of content reproduction apps while maintaining the content reproduction for the remaining content reproduction apps in the paused state. Accordingly, information related to content reproduction may be displayed on the page of the currently running content reproduction app, and information about the state in which content reproduction has been paused (e.g., 'pause' information is displayed) may be displayed on the pages of the remaining content reproduction apps. If the reproduction resume is selected for the content paused by the user on the current page, the content reproduction may be resumed, so that audio according to the content reproduction may be output through the speaker (e.g., a built-in speaker) of the electronic device 101. As such, if the content reproduction of the first content reproduction app among the plurality of content reproduction apps is switched to the paused state, the audio output through at least one output device corresponding to the first content reproduction app may also be paused. Conversely, when the content reproduction of the first content reproduction app is resumed, audio according to the content reproduction of the first content reproduction app may be output through the output device connected to the electronic device 101, i.e., at least one output device corresponding to the first content reproduction app.

Further, as shown in FIG. 10, a list of the plurality of output devices may be displayed on the pages 1010, 1020, and 1030 respectively corresponding to the content reproduction apps. Referring to the first page 1010, the list displayed on the first page 1010 may include an item 1005 indicating that content is currently being reproduced using the built-in speaker of the electronic device 101 in addition to the list of output devices connectable to the electronic device 101. For example, content mapped to a 'current mobile phone' reproduced using the built-in speaker of the electronic device 101 may also be displayed. The content mapped to the 'current mobile phone' may also be added in the form of a card in a multi-session. Further, when there are a plurality of contents, the number of speakers capable of output, of the electronic device 101 is physically one, so that it is difficult to simultaneously reproduce several contents. Thus, the content selected by the user may be reproduced.

In this case, a page indicator 1040 may be displayed to indicate that there are a plurality of executed content reproduction apps, and that there are a plurality of pages according to the content reproduction apps. For example, the electronic device 101 may display a page indicator 1040 to distinguish the pages where the lists of connectable output devices when reproducing content are displayed differently in each content reproduction app. For example, the electronic device 101 may display dots corresponding to the number of the plurality of pages and display the dot corresponding to the page being currently displayed on the screen in a different color from those of the other dots.

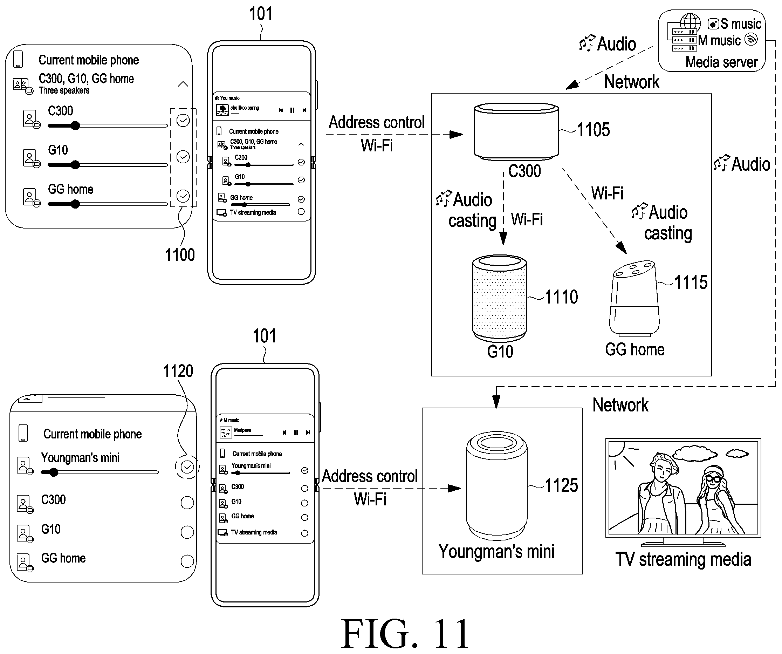

FIG. 11 is a view illustrating a transmission scheme for content reproduction according to an embodiment.

Referring to FIG. 11, according to an embodiment, the user may select one or more output devices from a list of output devices related to a content reproduction app using a check box 1100. If the electronic device 101 receives a stream of content in real-time based on a designated transmission service protocol, the electronic device 101 may transmit address information (e.g., URL information) capable of receiving an output according to the reproduction of the content to at least one output device 1105, 1110, and 1115 when reproducing content. Here, the at least one output device 1105, 1110, and 1115 may be an output device selected by the user from the list of output devices. Accordingly, the at least one output device 1105, 1110, and 1115 may provide an output according to content reproduction received from a corresponding server (e.g., a content provider) based on the address information. Further, the address information (e.g., URL information) capable of receiving the output according to the reproduction of the content may be transmitted to any one output device 1105 so that any one output device 1105 among the at least one output device 1105, 1110, and 1115 may share the output according to content reproduction received from the server, with the other output devices 1110 and 115 and output the same. Even when reproducing downloaded or stored content in the electronic device 101, the user may select one or more output devices from the list of output devices related to the content reproduction app using the check box 1120. The electronic device 101 may provide audio for the content being reproduced to the selected output device 1125 through the Bluetooth scheme based on the transmission service protocol. According to an embodiment, the electronic device 101 may provide a list of output devices capable of outputting audio for content being reproduced even in an environment in which connection with a server providing a streaming service is impossible, thereby increasing use convenience.

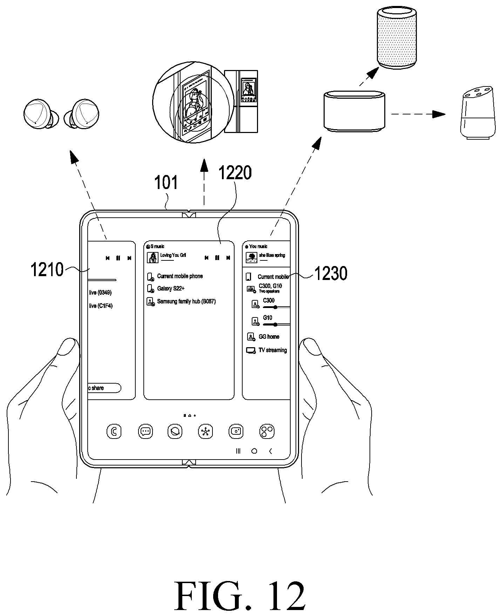

According to an embodiment, the integrated user interface capable of individually controlling at least one external device for each service that reproduces content may be provided in various forms. This is described in detail with reference to FIGS. 12 to 16.

FIG. 12 is a view illustrating an example of a screen representing pages in which a list of output devices controllable for each content reproduction service is displayed in a first scheme according to an embodiment.

Referring to FIG. 12, the electronic device 101 may horizontally arrange and display the pages in the order of the first page 1210, the second page 1220, and the third page 1230 according to the execution order of the plurality of content reproduction apps. One page may be allocated and displayed for each content reproduction app. The first page 1210 may include a list (e.g., an earphone list) of connectable output devices based on the first content reproduction app (or first transmission service protocol). The second page 1220 may include a list (e.g., smart home appliances) of connectable output devices based on the second content reproduction app (or second transmission service protocol). The third page 1230 may include a list (e.g., Bluetooth speakers) of connectable output devices based on the third content reproduction app (or third transmission service protocol). As described above, the lists of output devices displayed for each page may be different from each other.

In a state in which at least one of the plurality of pages 1210, 1220, and 1230 is displayed, the pages may be navigated and displayed according to the moving direction of the user's input (e.g., a swipe gesture to the left or a swipe gesture to the right) with respect to the currently displayed page.

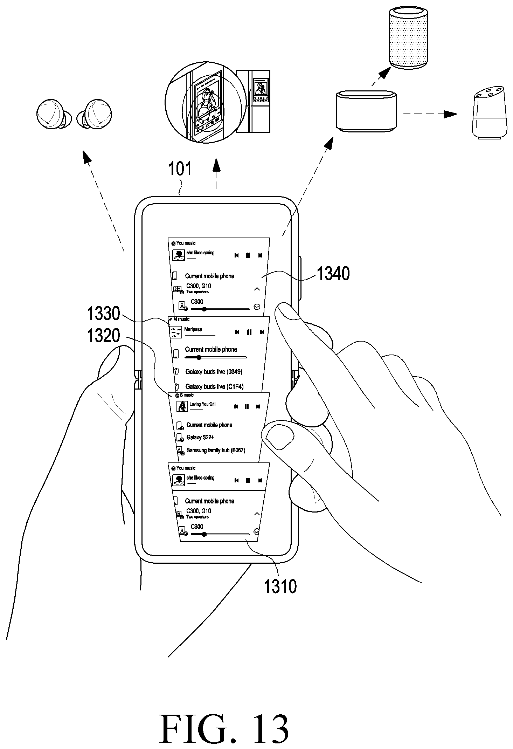

FIG. 13 is a view illustrating an example of a screen representing pages in which a list of output devices controllable for each content reproduction service is displayed in a second scheme according to an embodiment. As shown in FIG. 13, the electronic device 101 may vertically arrange and display the pages in the order of the first page 1310, the second page 1320, the third page 1330, and the fourth page 1340 according to the execution order of the plurality of content reproduction apps.

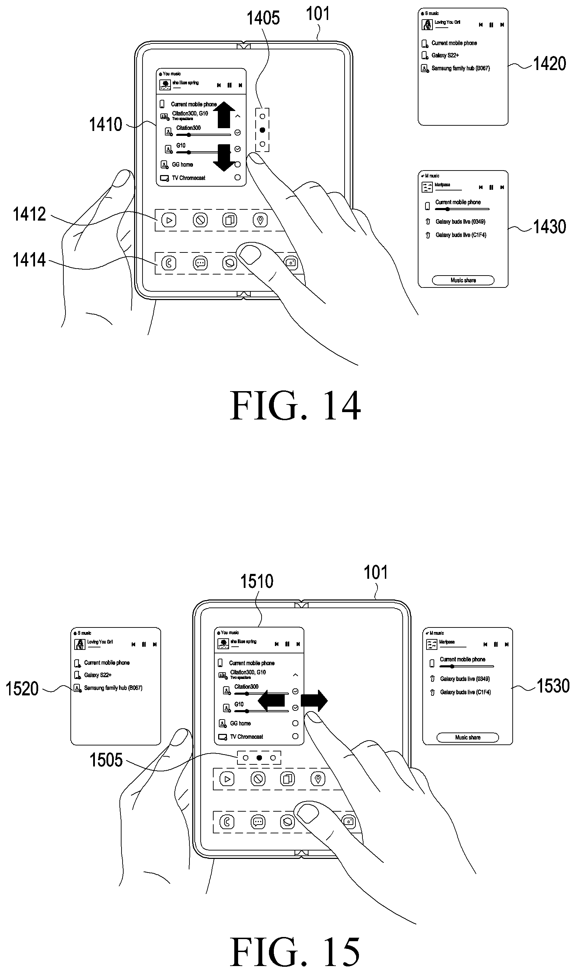

FIG. 14 is a view illustrating an example of a screen representing pages in which a list of output devices controllable for each content reproduction service is displayed in a third scheme according to an embodiment.

As shown in FIG. 14, the electronic device 101 may perform control so that only one page 1410 is externally exposed and displayed with the pages 1410, 1420, and 1430 superposed in a stacked layer structure. The one page may be referred to as a widget.

As shown in FIG. 14, home menus 1412 and favorite menu icons along with the widget-type pages 1410, 1420, and 1430 may be disposed on the home screen. As described above, a page having a multi-session card in the form of a widget may be exposed through the home screen. User accessibility may be increased through the widget displayed on the home screen, thereby increasing user convenience. A page indicator 1405 may be displayed to indicate that there are a plurality of pages although only one page is displayed. Accordingly, in a state in which the page indicator is displayed to distinguish the pages where the lists of output devices connectable when reproducing content are displayed differently in each content reproduction app, the pages 1410, 1420, and 1430 may be navigated and displayed according to the moving direction of the user's input (e.g., a swipe gesture in the upper direction or a swipe gesture in the lower direction).

FIG. 14 illustrates an example in which movement between the pages 1510, 1520, and 1530 in the stacked structure uses the user's input in the upper direction or lower direction but, as illustrated in FIG. 15, movement between the pages 1510, 1520, and 1530 in the stacked structure may be possible according to the user's input in the left or right direction. Here, FIG. 15 is a view illustrating an example of a screen representing pages where a list of output devices controllable for each content reproduction service is displayed in the fourth scheme. As shown in FIG. 15, a page indicator 1505 may be displayed to indicate that there are a plurality of pages according to the content reproduction application. As shown in FIG. 15, the pages 1510, 1520, and 1530 in a stacked structure may also be displayed on the home screen to increase user accessibility.

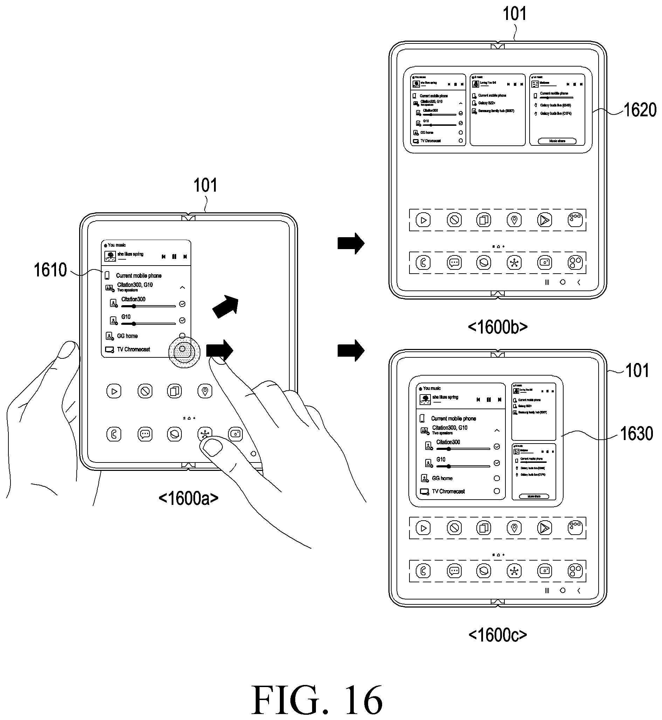

FIG. 16 is a view illustrating an example of a screen representing pages in which a list of output devices controllable for each content reproduction service is displayed in a fifth scheme according to an embodiment. FIG. 16 illustrates an example of dynamically expanding and providing a layout according to a widget (or a page) corresponding to a content reproduction app.

For example, in a state in which the first widget (or first page) 1610 is displayed, as shown in 1600a of FIG. 16, the remaining plurality of widgets hidden in addition to the first widget may be disposed on a certain area 1620 according to a user input as shown in 1600b of FIG. 16. Unlike this, when displaying a plurality of widgets on a predetermined area 1630, as shown in 1600c of FIG. 16, the electronic device 101 may display each widget at a different display ratio. As shown in 1600a to 1600c of FIG. 16, the widgets may be disposed on the home screen including the home menus and favorite menus. In FIGS. 14 to 16 described above, an example in which the widgets are arranged horizontally, vertically, or at different display ratios has been described, but the sizes, arrangements, or shapes of the widgets are not limited to the foregoing, but may be modified into various forms.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-volatile storage medium storing instructions configured to, when executed by a processor 120, 320 of an electronic device 101, cause the electronic device to perform at least one operation, the at least one operation may comprise obtaining information about at least one output device corresponding to each of a plurality of content reproduction services. According to an embodiment, the storage medium may comprise, based on the obtained information, generating a plurality of pages for displaying a list of at least one output device for each of the plurality of content reproduction services. According to an embodiment, the storage medium may comprise, based on a first user input, displaying at least one of the plurality of pages. According to an embodiment, the storage medium may comprise, in response to selection of at least one output device from a list of the at least one output device of the displayed page, controlling to provide a corresponding content reproduction service among the plurality of content reproduction services by the selected at least one output device.

## Claims

1. An electronic device (101) comprising:
a display (160, 360);
a communication module (190, 390);
a processor (120, 320) operatively connected to the display and the communication module; and
memory (130, 330) storing instructions that, when executed by the processor, cause the electronic device to:
obtain information about at least one output device corresponding to each of a plurality of content reproduction services through the communication module (390);
based on the obtained information, generate a plurality of pages for displaying a list of at least one output device for each of the plurality of content reproduction services;
based on a first user input, display at least one of the plurality of pages on the display (360); and
in response to selection of at least one output device from the list of the at least one output device of the displayed page, provide a corresponding content reproduction service among the plurality of content reproduction services by the selected at least one output device.

2. The electronic device of claim 1, wherein the instructions are configured to cause the electronic device to output an audio according to the content reproduction by the selected at least one output device during content reproduction of the corresponding content reproduction service.

3. The electronic device of claim 1 or 2, wherein the instructions are configured to cause the electronic device to, in response to selection of two or more output devices from the list of the at least one output device of the displayed page, output an audio according to the content reproduction during the content reproduction of the corresponding content reproduction service by each of the selected two or more output devices.

4. The electronic device of any one of claims 1 to 3, wherein the instructions are configured to cause the electronic device to:
identify a transmission service protocol for each of the plurality of content reproduction services;
identify at least one output device connectable to the electronic device based on the identified transmission service protocol; and
generate a list of the at least one output device connectable to the electronic device, corresponding to each identified transmission service protocol.

5. The electronic device of any one of claims 1 to 4, wherein the instructions are configured to cause the electronic device to, in response to the selection of the at least one output device from the list of the at least one output device of the displayed page, connect to the selected at least one output device based on a transmission service protocol for the corresponding content reproduction service.

6. The electronic device of any one of claims 1 to 5, wherein the instructions are configured to cause the electronic device to connect to at least one output device from the list of the at least one output device of the displayed page based on a first transmission service protocol, and connect to a remaining output device from the list of the at least one output device of the displayed page based on a second transmission service protocol.

7. The electronic device of any one of claims 1 to 6, wherein the transmission service protocol includes at least one transmission scheme among a streaming media player scheme, a sound source streaming service scheme, an audio mirroring scheme, a digital living network alliance (DLNA) scheme, or a Bluetooth scheme.

8. The electronic device of any one of claims 1 to 7, wherein the instructions are configured to cause the electronic device to, while the plurality of pages are arranged in an order of executing a first page, a second page, and a third page, and the first page is displayed, display a page different from the first page in response to a swipe gesture to the first page.

9. The electronic device of any one of claims 1 to 8, wherein the instructions are configured to cause the electronic device to:
receive a request for outputting the audio according to the content reproduction during the content reproduction of the corresponding content reproduction service among the plurality of content reproduction services on the electronic device; and
display, on the display (360), a page for displaying the list of the at least one output device for the corresponding content reproduction service in response to the request.

10. A method for operating an electronic device (101) controlling output devices based on content reproduction, the method comprising:
obtaining information about at least one output device corresponding to each of a plurality of content reproduction services;
based on the obtained information, generating a plurality of pages for displaying a list of at least one output device for each of the plurality of content reproduction services;
based on a first user input, displaying at least one of the plurality of pages; and
in response to selection of at least one output device from the list of the at least one output device of the displayed page, controlling to provide a corresponding content reproduction service among the plurality of content reproduction services by the selected at least one output device.

11. The method of claim 10, wherein controlling to provide the corresponding content reproduction service includes controlling to output an audio according to the content reproduction by the selected at least one output device during content reproduction of the corresponding content reproduction service.

12. The method of claim 10 or 12, wherein controlling to provide the corresponding content reproduction service includes, in response to selection of two or more output devices from the list of the at least one output device of the displayed page, controlling to output an audio according to the content reproduction during the content reproduction of the corresponding content reproduction service by each of the selected two or more output devices.

13. The method of any one of claims 10 to 12, further comprising:
identifying a transmission service protocol for each of the plurality of content reproduction services;
identifying at least one output device connectable to the electronic device based on the identified transmission service protocol; and
generating a list of the at least one output device connectable to the electronic device, in response to each identified transmission service protocol.

14. The method of any one of claims 10 to 13, further comprising, in response to the selection of the at least one output device from the list of the at least one output device of the displayed page, connecting to the selected at least one output device based on a transmission service protocol for the corresponding content reproduction service.

15. A non-volatile storage medium storing instructions configured to, when executed by a processor (120, 320) of an electronic device (101), cause the electronic device to perform at least one operation, the at least one operation comprising:
obtaining information about at least one output device corresponding to each of a plurality of content reproduction services;
based on the obtained information, generating a plurality of pages for displaying a list of at least one output device for each of the plurality of content reproduction services;
based on a first user input, displaying at least one of the plurality of pages; and
in response to selection of at least one output device from the list of the at least one output device of the displayed page, controlling to provide a corresponding content reproduction service among the plurality of content reproduction services by the selected at least one output device.
